# EUROPÄISCHE PATENTANMELDUNG

(11) **EP 1 826 469 A1**
(43) Veröffentlichungstag der Anmeldung: **29.08.2007**
(21) Anmeldenummer: 06003773.6
(22) Anmeldetag: 24.02.2006
(51) Int. Cl.: F16L 21/06

(54) **Rohrverbinder**

(71) Anmelder: Carl Freudenberg KG, 69469 Weinheim (DE)
(72) Erfinder: Irmler, Josef, 82547 Münsing (DE); Meinl, Willibald, 82515 Wolfratshausen (DE)

(57) **Zusammenfassung**

Ein Rohrverbinder zum Verbinden zweier Rohrenden, umfassend eine äußere Lage (1), welche mindestens eine innere Lage (2) umschließt, wobei die innere Lage (2) durch die äußere Lage (1) in radialer Richtung mit Kraft beaufschlagbar ist, ist im Hinblick auf die Aufgabe, einen Rohrverbinder anzugeben, welcher nach einfacher Montage einen einwandfreien Betrieb einer Rohrverbindung gewährleistet, dadurch gekennzeichnet, dass der inneren (2) oder äußeren Lage (1) Mittel (3) zur Begrenzung der Kraftbeaufschlagung der inneren Lage (2) zugeordnet sind.

## Beschreibung

### Technisches Gebiet

Die Erfindung betrifft einen Rohrverbinder zum Verbinden zweier Rohrenden, umfassend eine äußere Lage, welche mindestens eine innere Lage umschließt, wobei die innere Lage durch die äußere Lage in radialer Richtung Kraft beaufschlagbar ist.

### Stand der Technik

Derartige Rohrverbinder sind aus dem Stand der Technik bereits bekannt. So offenbart die DE 202 10 323 U1 einen Rohrverbinder, welcher die Enden zweier Rohre verbinden kann. Der gattungsbildende Rohrverbinder findet Anwendung in Abgassträngen von Kraftfahrzeugen.

Häufig müssen Rohre verbunden werden, welche unterschiedliche Außendurchmesser aufweisen. Hierbei ist problematisch, dass bei der Montage des Rohrverbinders sehr genau darauf geachtet werden muss, dass zwischen Rohrverbinder und Mantel des umgebenen Rohres keine Spalte oder Leckagen entstehen. Dies kann insbesondere dann der Fall sein, wenn die innere Lage bei der Montage des Rohrverbinders durch ungünstige Kraftbeaufschlagung an einem Rohrende sehr fest, am anderen Rohrende dagegen nur lose anliegt.

Der gattungsbildende Rohrverbinder erfordert daher eine aufwändige Montage, welche äußerst fehlerträchtig ist. Die Folge hiervon sind Rohrverbindungen, welche undichte Stellen aufweisen oder diese zumindest im Betrieb der Rohrverbindung ausbilden können.

### Darstellung der Erfindung

Der Erfindung liegt daher die Aufgabe zu Grunde, einen Rohrverbinder anzugeben, welcher nach einfacher Montage einen einwandfreien Betrieb einer Rohrverbindung gewährleistet.

Die vorliegende Erfindung löst die zuvor genannte Aufgabe durch die Merkmale des Patentanspruchs 1. Danach ist ein Rohrverbinder der eingangs genannten Art dadurch gekennzeichnet, dass der inneren oder äußeren Lage Mittel zur Begrenzung der Kraftbeaufschlagung der inneren Lage zugeordnet sind.

Erfindungsgemäß ist erkannt worden, dass Mittel zur Begrenzung der radialen Kraftbeaufschlagung der inneren Lage sicherstellen, dass die innere Lage an Rohren unterschiedlichen Außendurchmessers definiert dichtend anlegbar ist. Die Mittel stellen sicher, dass der Monteur die äußere Lage in radialer Richtung mit beliebiger Kraft beaufschlagen kann und die innere Lage dennoch nicht über ein bestimmtes Maß mit Kraft beaufschlagt wird. Dabei kann der Monteur die äußere Lage so fest an den jeweiligen Rohrenden anbringen, dass diese bei Vibrationen oder relativen Bewegungen zueinander im Bereich der Rohrverbindung starr miteinander verbunden bleiben. Hierdurch werden Bewegungen der miteinander verbundenen Rohre in nachgeordnete, schwingungsdämpfende Einrichtungen abgeleitet.

Bei geeigneter Wahl der Dimensionierung der Mittel ist somit stets sicher gestellt, dass Rohre unterschiedlichen Außendurchmessers dicht und zugleich fest zusammengefügt werden können. Insoweit ist nach einfacher Montage eine dichte Verbindung von Rohren sichergestellt, so dass ein einwandfreier Betrieb der Rohrverbindung gewährleistet ist. Folglich ist die eingangs genannte Aufgabe gelöst.

In einer konstruktiv besonders günstigen Ausgestaltung könnten die Mittel im Bereich von Öffnungen zur Aufnahme von Rohrenden angeordnet sein. Durch diese konkrete Ausgestaltung ist sicher gestellt, dass die Mittel direkt am Mantel des Rohres anliegen können und das Rohr somit als Widerlager fungieren kann.

Die Mittel könnten in radialer Richtung nach innen abragend ausgestaltet sein. Hierdurch ist sicher gestellt, dass die Mittel einen Mindestabstand zwischen der Innenwandung der äußeren Lage und der Mantelfläche eines Rohres herstellen können. Vor diesem Hintergrund ist denkbar, dass die Mittel inkompressibel ausgestaltet sind, wobei die innere Lage zumindest bereichweise kompressibel ausgestaltet ist und insoweit selbst als Dichtung ausgebildet sein könnte. Dabei ist denkbar, dass die innere Lage beim Anpressen an den Rohrmantel nur bis zu einem gewissen Grad deformierbar ist, nämlich solange bis die Mittel am Rohrmantel zum Anschlag kommen und eine weitere Kompression der inneren Lage bzw. Dichtung verhindern.

Die Mittel könnten als Elemente ausgestaltet sein, die eine größere Dicke als die innere Lage aufweisen. Durch diese konkrete Ausgestaltung wird zwischen der inneren Lage und der äußeren Lage ein radial umlaufender Hohlspalt geschaffen, in welchen eine Dichtung einlegbar ist. Bei dieser Ausgestaltung kann die Dichtung zwei Rohrenden unterschiedlichen Außendurchmessers überlappen und maximal auf die Höhe des Spaltes komprimiert werden.

Die Mittel könnten vor diesem Hintergrund als streifenförmige Lagen ausgestaltet sein. Die streifenförmigen Lagen können problemlos gefertigt und montiert werden. Dabei ist denkbar, dass die innere Lage zwischen den streifenförmigen Lagen eingelegt ist. Ganz konkret könnte die innere Lage beispielsweise eine Dicke von 0,6 mm aufweisen und jeder Streifen könnte beispielsweise eine Dicke von 1 mm aufweisen. Bei dieser konkreten Ausgestaltung wäre eine Dichtung, die auf der inneren Lage aufliegt, auf 0,4 mm verpressbar.

Die innere Lage und die streifenförmigen Mittel könnten aus Metall, vorzugsweise Edelstahl oder Federstahl, gefertigt sein, da diese Materialien ausreichend duktil sind, um eventuelle Unebenheiten des Rohrmantels auszugleichen.

Die Mittel könnten bereichweise an den äußeren Lagen festgelegt sein. Diese konkrete Ausgestaltung erlaubt eine geringfügige Bewegung der Mittel relativ zur äußeren Lage, wenn diese zusammen gezogen wird. Hierdurch können Beschädigungen der inneren Lage bzw. einer eventuell eingelegten Dichtung vermieden werden. Vor diesem Hintergrund ist denkbar, dass streifenförmige Lagen derart am Innenumfang einer zylindrischen Hülse angelegt sind, dass die Enden der streifenförmigen Lagen einen Spalt definieren. Ein solcher Spalt kann beim Zusammenziehen einer gegebenenfalls in Längsrichtung geschlitzten äußeren Hülse bzw. äußeren Lage geschlossen werden, so dass die Enden der streifenförmigen Lagen sich einander annähern und die streifenförmigen Lagen die Rohrmäntel fest umgreifen können.

Die innere Lage könnte als Streifen mit einem abragenden Abschnitt zur Aufnahme in einer Ausnehmung ausgebildet sein, welche ebenfalls in der inneren Lage ausgebildet ist. Der abragende Abschnitt könnte dabei trapezförmig ausgebildet sein und in eine komplementär hierzu ausgebildete Ausnehmung einfügbar sein. Hierdurch ist eine Zentrierung der inneren Lage beim Zusammenziehen der äußeren Lage sicher gestellt. Hierbei könnte der abragende Abschnitt bereichsweise etwas breiter sein als die lichte Weite der Ausnehmung, um zu verhindern, dass die innere Lage über ein bestimmtes Maß in ihrer radialen Ausdehnung verringert wird.

Die innere Lage könnte eine Dichtung umgeben. Diese Ausgestaltung stellt sicher, dass die Dichtung nicht direkt durch die äußere Lage mit Kraft beaufschlagt wird. Des Weiteren kann durch die Vorkehrung einer inneren Lage zwischen äußerer Lage und Dichtung eine Ausnehmung oder Ausnehmungen im Mantel der äußeren Lage verdeckt werden, um eine Abdichtung zu bewirken. Die Dichtung könnte aus Graphit gefertigt sein. Graphit zeigt eine Temperaturresistenz bis zu 500°C, wenn einem heißen Gasstrom Sauerstoff beigemengt ist. Vor diesem Hintergrund ist denkbar, dass die Dichtung zwei Graphitschichten aufweist, welche eine metallische Folie, beispielsweise mit einer Stärke von 0,05 mm, sandwichartig einschließen. Die metallische Folie stabilisiert die Dichtung. Die Dichtung könnte Glimmer umfassen. Eine solche Dichtung zeigt eine hohe Gebrauchstauglichkeit auch bei Temperaturen von 1200°C. Bei Verwendung der hier beschriebenen Dichtungen ist der Rohrverbinder im Abgasstrang eines Kraftfahrzeugs problemlos einsetzbar.

Die Dichtung könnte Ausnehmungen aufweisen. Die Vorkehrung von Ausnehmungen stellt sicher, dass die Dichtung beim Zusammenziehen der äußeren Lage und bei Veränderung ihrer radialen Ausdehnung keine Falten bildet. Die Faltenbildung kann zu undichten Stellen führen und die Lebensdauer der Dichtung verringern.

Vor diesem Hintergrund ist denkbar, dass die Dichtung zumindest bereichsweise Erhebungen aufweist. Die Erhebungen könnten beispielsweise als Riffelung oder Rillierung ausgestaltet sein. Denkbar sind auch punktuelle Erhebungen. Diese konkrete Ausgestaltung stellt sicher, dass Unebenheiten auf dem Mantel des Rohrs ausgeglichen werden können. Die Erhebungen können beispielsweise im Querschnitt zick-zack-förmig ausgestaltet sei. Durch diese Ausgestaltung ist eine Liniendichtung im Bereich der Spitzen der zick-zack-förmigen Ausgestaltung möglich.

Die äußere Lage könnte als Hülse ausgebildet sein. Diese konkrete Ausgestaltung erlaubt eine vollflächige Umgebung der inneren Lage sowie der Mittel zur Begrenzung der Kraftbeaufschlagung. Vor diesem Hintergrund ist denkbar, dass die Hülse beispielsweise eine Dicke von 0,6 mm aufweist. Eine solche Dicke hat sich als vorteilhaft erwiesen, um eine Anlage an Rohren unterschiedlichen Außendurchmessers zu kompensieren. Die Hülse weist vorzugsweise einen Schlitz in Längsrichtung auf, der beim Zusammenziehen der Hülse geschlossen oder in seiner Ausdehnung verringert wird. Der Schlitz könnte auch labyrinthartig ausgestaltet sein, um eine Anlage der Hülse an Rohre unterschiedlichen Außendurchmessers zu begünstigen.

Die äußere Lage könnte in Umfangsrichtung Bereiche unterschiedlicher Materialstärke aufweisen. Diese Ausgestaltung erlaubt die Ausbildung zweier Bereiche der äußeren Lage, welche nahezu unabhängig voneinander in unterschiedlichem Maße in ihrer radialen Ausdehnung veränderbar sind. Die äußere Lage ist insoweit problemlos an einem Ende stärker in ihrer radialen Ausdehnung verringerbar als am anderen Ende.

Vor diesem Hintergrund ist denkbar, dass die äußere Lage in Umfangsrichtung Ausnehmungen, insbesondere einen Schlitz, aufweist.

Der äußeren Lage könnte eine Spanneinrichtung zugeordnet sein. Die Vorkehrung einer Spanneinrichtung erlaubt die Kraftbeaufschlagung der äußeren Hülse und eine Verringerung deren radialer Ausdehnung.

Die Spanneinrichtung könnte eine Klaue aufweisen, welche Flanschbereiche der äußeren Lage umgreift. Vor diesem Hintergrund ist denkbar, dass die Flanschbereiche einen sich verjüngenden Spalt begrenzen. Durch Schließen dieses Spaltes kann die äußere Lage sehr dosiert und definiert mit Kraft beaufschlagt werden.

Die Spanneinrichtung könnte eine Klipsverbindung umfassen. Eine solche Verbindung erlaubt eine schnelle Montage.

Die Spanneinrichtung könnte Schrauben aufweisen, die in Gewinde eingreifen, die direkt der äußeren Lage zugeordnet sind. Diese konkrete Ausgestaltung erlaubt eine sehr kompakte und platzsparende Ausbildung des Rohrverbinders, da das Maß der vom Außenmantel der äußeren Hülle abragenden Elemente lediglich durch die Dimension der Gewinde festgelegt ist.

Vor diesem Hintergrund könnten der äußeren Lage in Längsrichtung längliche Hülsen zugeordnet sein, welche Durchgänge mit Gewinden aufweisen. In diese Durchgänge könnten Schrauben eingeschraubt sein. Hierdurch ist lediglich durch Anziehen der Schrauben die radiale Ausdehnung der äußeren Hülse veränderbar.

Es gibt nun verschiedene Möglichkeiten, die Lehre der vorliegenden Erfindung in vorteilhafter Weise aus zu gestalten und weiter zu bilden. Dazu ist einerseits auf die nachgeordneten Ansprüche, andererseits auf die nachfolgende Erläuterung bevorzugter Ausführungsbeispiele des erfindungsgemäßen Rohrverbinders anhand der Zeichnung zu verweisen.

In Verbindung mit der Erläuterung der bevorzugten Ausführungsbeispiele anhand der Zeichnung werden auch im Allgemeinen bevorzugte Ausgestaltungen und Weiterbildungen der Lehre erläutert.

### Kurzbeschreibung der Zeichnung

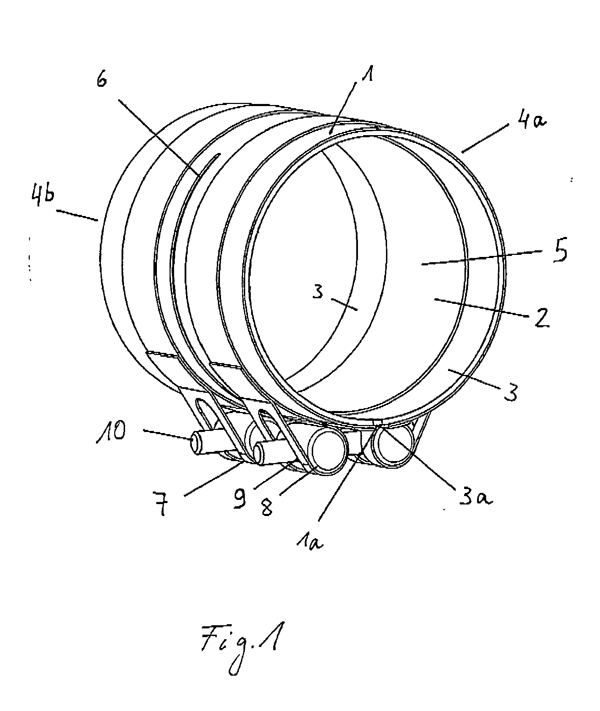

In der Zeichnung zeigen
- Fig. 1: einen Rohrverbinder mit einer Spanneinrichtung, welche nur in geringem Maße von der äußeren Lage abragt,

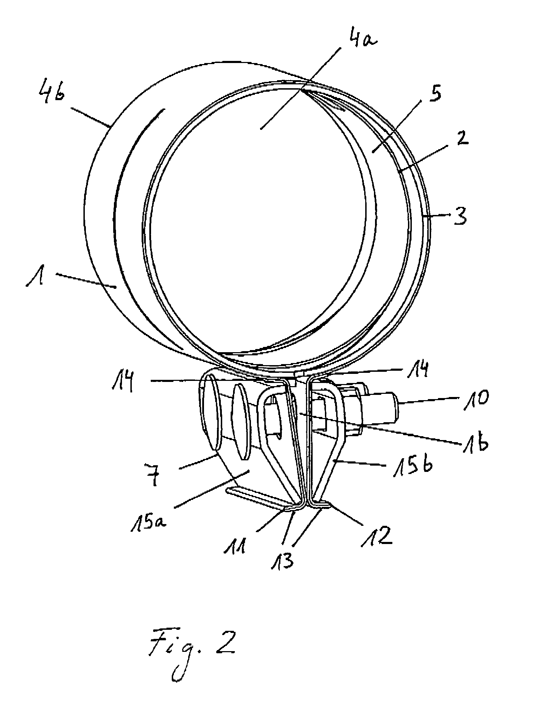

- Fig. 2: einen Rohrverbinder mit einer äußeren Lage, welche abragende Flanschbereiche aufweist, die von einer Klaue umgriffen werden, und
- Fig. 3: eine Dichtung, welche Ausnehmungen aufweist.

### Ausführung der Erfindung

Fig- 1 zeigt einen Rohrverbinder zum Verbinden zweier Rohrenden, welche eine äußere Lage 1 umfasst, welche mindestens eine innere Lage 2 umschließt. Die innere Lage 2 ist durch die äußere Lage 1 in radialer Richtung kraftbeaufschlagbar. Der inneren Lage 2 oder der äußeren Lage 1 sind Mittel 3 zur Begrenzung der Kraftbeaufschlagung der inneren Lage 2 zugeordnet

Die Mittel 3 sind im Bereich der Öffnungen 4a, 4b, zur Aufnahme von Rohrenden angeordnet. Die Mittel 3 sind in radialer Richtung abragend ausgestaltet. Dabei ragen die Mittel 3 in radialer Richtung in Richtung der Längsachse des Rohrverbinders ab- Die Mittel 3 sind als Elemente ausgestaltet, die eine größere Dicke als die innere Lage 2 aufweisen.

Die Mittel 3 sind als streifenförmige Lagen 3 ausgestaltet, welche bereichsweise an der äußeren Lage 1 festgelegt sind. Die Festlegung erfolgt hierbei durch Schweißpunkte an einem Ende der streifenförmigen Lagen 3. Das andere Ende und der Rest der streifenförmigen Lagen 3 sind frei beweglich. Die Lagen 3 definieren durch Ihre Enden einen Spalt 3a, der durch Annäherung der Enden in seiner Ausdehnung verringert werden kann.

Die äußere Lage 1 ist aus einem metallischen Werkstoff gefertigt. Die Mittel 3 und die innere Lage 2 sind ebenfalls aus einem metallischen Werkstoff gefertigt. Als metallischer Werkstoff wird Edelstahl verwendet.

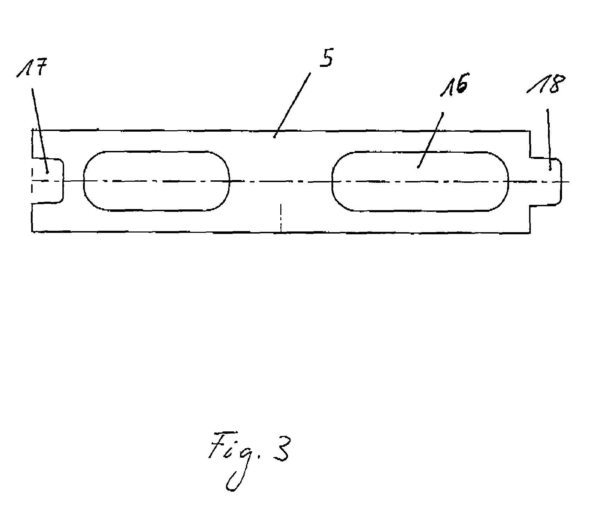

Die innere Lage 2 ist als Streifen mit einem abragenden Abschnitt zur Aufnahme in einer Ausnehmung ausgebildet. Die Ausnehmung ist ebenfalls in der inneren Lage 2 ausgebildet. Der abragende Abschnitt ist analog dem abragenden Abschnitt 18 der Dichtung 5 gemäß Fig. 3 ausgestaltet. Die Ausnehmung ist ebenfalls analog der Ausnehmung 17 der Dichtung 5 gemäß Fig. 3 ausgestaltet. Der abragende Abschnitt und die Ausnehmung bewirken eine Zentrierung der inneren Lage 2.

Die innere Lage 2 umgibt eine Dichtung 5, welche als Graphitdichtung ausgestaltet ist.

Die äußere Lage 1 ist als zylindrische Hülse 1 ausgebildet, welche eine Dicke von beispielsweise 0,6 mm aufweisen kann. Die äußere Lage 1 weist in Umfangsrichtung einen Bereich 6 mit einer Materialstärke auf, welche geringer ist als die Materialstärke im Bereich der Öffnungen 4a, 4b. Der Bereich 6 ist als Schlitz ausgebildet.

Der äußeren Lage 1 ist im Bereich eines Schlitzes 1a in Längsrichtung eine Spanneinrichtung 7 zugeordnet. Die Spanneinrichtung 7 umfasst längliche Hülsen 8, welche mit Durchgängen 9 versehen sind, in die Schrauben 10 einschraubbar sind.

Fig- 2 zeigt eine Spanneinrichtung 7 mit Flanschbereichen 11 und 12, welche einen sich verjüngenden Spalt 1 b definieren. Die Flanschbereiche 11, 12 sind der äußeren Lage 1 zugeordnet. Die Flanschbereiche 11, 12 weisen Falzbereiche auf, welche durch eine Faltung entstehen. Hierbei werden Sockel 13, 14 ausgebildet, an denen eine Klaue 15a, 15b anlegbar ist. Die Sockel 14 verhindern die direkte Anlage der Klaue 15a, 15b an der äußeren Lage 1. Hierdurch wird die Lage 1 nicht beschädigt.

Die Klaue 15a, 15b sowie die Flansche 11, 12 weisen Durchgänge auf, durch die Schrauben 10 hindurchführbar sind.

Fig. 3 zeigt eine Dichtung 5 mit Ausnehmungen 16, welche verhindern sollen, dass die Dichtung 5 zur Faltenbildung neigt.

Die Dichtung 5 weist an ihrem einen Ende eine Ausnehmung trapezförmiger Ausgestaltung 17 auf. An ihrem anderen Ende weist die Dichtung 5 einen abragenden Abschnitt 18 auf, welcher ebenfalls trapezförmig ausgestaltet ist. Die Ausgestaltung der Ausnehmung 17 bzw. des abragenden Abschnitts 18 ist auch bei der inneren Lage 2 realisiert und dient deren Zentrierung beim Zusammenbringen der Enden der inneren Lage 2. Der Effekt der Zentrierung findet selbsiverständlich auch beim Zusammenführen der Dichtung 5 statt.

Denkbar ist auch, dass die innere Lage 2 mit Ausnehmungen versehen ist, die denen der Dichtung 5 entsprechen.

Die Dichtung 5 kann beispielsweise eine Breite von 48 mm aufweisen. Die Dichtung 5 kann als Weichstoffdichtung, zum Beispiel als Graphitdichtung, ausgestaltet sein.

Hinsichtlich weiterer vorteilhafter Ausgestaltungen und Weiterbildungen der erfindungsgemäßen Lehre wird einerseits auf den allgemeinen Teil der Beschreibung und andererseits auf die beigefügten Patentansprüche Verwiesen.

Abschließend sei ganz besonders hervorgehoben, dass die zuvor rein willkürlich ausgewählten Ausführungsbeispiele lediglich zur Erörterung der erfindungsgemäßen Lehre dienen, diese jedoch nicht auf diese Ausführungsbeispiele einschränken.

## Patentansprüche

1. Rohrverbinder zum Verbinden zweier Rohrenden, umfassend eine äußere Lage (1), welche mindestens eine innere Lage (2) umschließt, wobei die innere Lage (2) durch die äußere Lage (1) in radialer Richtung mit Kraft beaufschlagbar ist, **dadurch gekennzeichnet, dass** der inneren (2) oder äußeren Lage (1) Mittel (3) zur Begrenzung der Kraftbeaufschlagung der inneren Lage (2) zugeordnet sind.

2. Rohrverbinder nach Anspruch 1, **dadurch gekennzeichnet, dass** die Mittel (3) im Bereich von Öffnungen (4a, 4b) zur Aufnahme von Rohrenden angeordnet sind.

3. Rohrverbinder nach Anspruch 1 oder 2, **dadurch gekennzeichnet, dass** die Mittel (3) in radialer Richtung abragend ausgestaltet sind.

4. Rohrverbinder nach einem der Ansprüche 1 bis 3, **dadurch gekennzeichnet, dass** die Mittel (3) als Elemente ausgestaltet sind, die eine größere Dicke als die innere Lage (2) aufweisen.

5. Rohrverbinder nach einem der Ansprüche 1 bis 4, **dadurch gekennzeichnet, dass** die Mittel (3) als streifenförmige Lagen ausgestaltet sind.

6. Rohrverbinder nach einem der Ansprüche 1 bis 5, **dadurch gekennzeichnet, dass** die Mittel (3) bereichsweise an der äußeren Lage (1) festgelegt sind.

7. Rohrverbinder nach einem der Ansprüche 1 bis 6, **dadurch gekennzeichnet, dass** die innere Lage (2) einen abragenden Abschnitt zur Aufnahme in einer Ausnehmung aufweist, weiche ebenfalls in der inneren Lage (2) ausgebildet ist.

8. Rohrverbinder nach einem der Ansprüche 1 bis 7, **dadurch gekennzeichnet, dass** die innere Lage (2) eine Dichtung (5) umgibt.

9. Rohrverbinder nach einem der Ansprüche 1 bis 8, **dadurch gekennzeichnet, dass** die Dichtung (5) Ausnehmungen (16, 17) aufweist.

10. Rohrverbinder nach einem der Ansprüche 1 bis 9, **dadurch gekennzeichnet, dass** die Dichtung (5) zumindest bereichsweise Erhebungen aufweist.

11. Rohrverbinder nach einem der Ansprüche 1 bis 10, **dadurch gekennzeichnet, dass** die äußere Lage (1) als Hülse ausgebildet ist.

12. Rohrverbinder nach einem der Ansprüche 1 bis 11, **dadurch gekennzeichnet, dass** die äußere Lage (1) in Umfangsrichtung Bereiche (6) verminderter Materialstärke aufweist.

13. Rohrverbinder nach Anspruch 12, **dadurch gekennzeichnet, dass** die Bereiche (6) verminderter Materialstärke als Ausnehmungen ausgestaltet sind.

14. Rohrverbinder nach einem der Ansprüche 1 bis 13, **dadurch gekennzeichnet, dass** der äußeren Lage (1) eine Spanneinrichtung (7) zugeordnet ist.

15. Rohrverbinder nach Anspruch 14, **dadurch gekennzeichnet, dass** die Spanneinrichtung (7) eine Klaue (15a, 15b) aufweist, welche Flanschbereiche (11, 12) der äußeren Lage (1) umgreift.

16. Rohrverbinder nach einem der Ansprüche 1 bis 14, **dadurch gekennzeichnet, dass** die Spanneinrichtung (7) eine Klipsverbindung umfasst.

17. Rohrverbinder nach einem der Ansprüche 1 bis 16, **dadurch gekennzeichnet, dass** die Spanneinrichtung (7) Schrauben (10) aufweist, die in Gewinde eingreifen, die direkt der äußeren Lage (1) zugeordnet sind.

18. Rohrverbinder nach Anspruch 17, **dadurch gekennzeichnet, dass** die Gewinde in länglichen Hülsen (8) mit Durchgängen (9) ausgebildet sind.
